# EUROPÄISCHE PATENTSCHRIFT

(11) **EP 2 877 761 B1**
(45) Veröffentlichungstag und Bekanntmachung des Hinweises auf die Patenterteilung: **10.04.2019**
(21) Anmeldenummer: 13729708.1
(22) Anmeldetag: 17.06.2013
(51) Int. Cl.: F16H 63/30, F16H 63/20

(54) **SCHALTEINRICHTUNG ZUM SCHALTEN EINES GETRIEBES**
SHIFTING DEVICE FOR SHIFTING A TRANSMISSION
DISPOSITIF DE COMMANDE POUR LA COMMANDE D'UNE BOÎTE DE VITESSES

(30) Priorität: 24.07.2012 DE 102012212910
(43) Veröffentlichungstag der Anmeldung: 03.06.2015
(73) Patentinhaber: Bayerische Motoren Werke Aktiengesellschaft, 80809 München (DE)
(72) Erfinder: OHNEMUS, Ulrich, 82285 Hattenhofen (DE); POBITZER, Fritz, 81927 München (DE)
(86) Internationale Anmeldenummer: PCT/EP2013/062491
(87) Internationale Veröffentlichungsnummer: WO 2014/016053

(56) Entgegenhaltungen:
- DE-A1- 3 202 517
- DE-A1- 10 133 695
- DE-A1-102004 051 602
- US-A- 1 118 389
- US-A- 1 928 782
- US-A- 4 155 271

## Beschreibung

Die vorliegende Erfindung betrifft eine Schalteinrichtung zum Schalten eines Getriebes gemäß dem Oberbegriff des Patentanspruches 1.

Eine derartige Schalteinrichtung ist aus der US 1 928 782 A bekannt. Zum technischen Hintergrund der Erfindung zählen die US 4 155 271 A, DE 32 02 517 A1, US 1 118 389 A1, DE 101 33 695 A1 sowie die DE 10 2004 051 602 A1.

Aus der älteren, nicht vorveröffentlichten deutschen Patentanmeldung DE 10 2012 204 562.7 ist ein Verfahren zum Schalten eines Getriebes nach dem sogenannten "Duo-Synchro-Prinzip" bekannt. Bei dem Getriebe handelt es sich um ein Handschaltgetriebe, d. h. um ein Getriebe, bei dem die einzelnen Schaltelemente rein mechanisch per Handkraft geschaltet werden. Ein derartiges Handschaltgetriebe benötigt keine Schaltaktuatorik bzw. Schaltsensorik. Das dort beschriebene Verfahren zeichnet sich dadurch aus, dass zum Erreichen eines jeden der möglichen Zielschaltzustände stets genau zwei Schaltelemente geschlossen werden ("Duo-Synchro-Schaltung") und zwar nacheinander im Sinne von nicht gleichzeitig.

Aufgabe der vorliegenden Erfindung ist es, eine Schalteinrichtung zu schaffen, welche bei einem Handschaltgetriebe derartige Duo-Synchro-Schaltungen ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Schalteinrichtung zum Schalten eines Getriebes, das eine erste Gruppe von Schaltelementen und eine zweite Gruppe von Schaltelementen aufweist. Bei den Schaltelementen kann es sich z. B. um Schaltmuffen (Schiebemuffen), denen jeweils eine Synchronisiereinrichtung zugeordnet sein kann. Die Schalteinrichtung weist eine Schaltwelle auf, die entlang einer Längsachse der Schaltwelle verschiebbar angeordnet ist und die zusätzlich drehbar um ihre Längsachse angeordnet ist. Durch Verschieben der Schaltwelle in eine von mehreren möglichen Verschiebestellungen kann mindestens ein Schaltelement der ersten Gruppe und mindestens ein Schaltelemente der zweiten Gruppe ausgewählt werden.

Mit Blick auf ein mit einem Handschaltgetriebe ausgestatteten Fahrzeug entspricht das Verschieben der Schaltwelle dem Anwählen einzelner Schaltgassen, z. B. der bei einem H-Schaltschema durch die Gänge 1, 2 gebildeten Schaltgasse, bzw. der durch die Gänge 3, 4 gebildeten Schaltgasse etc. In jeder der möglichen Verschiebestellungen der Schaltwelle kann diese gedreht werden. Das Drehen der Schaltwelle entspricht dem Ein- bzw. Auslegen eines Ganges in einer Schaltgasse.

Der Kern der Erfindung besteht darin, dass in mindestens einer Verschiebestellung der Schaltwelle (d. h. in mindestens einer der Schaltgassen des Schalthebels bzw. des Getriebes) durch das Verdrehen der Schaltwelle mindestens zwei Schaltelemente betätigbar sind und zwar derart, dass das mindestens eine ausgewählte Schaltelement der ersten Gruppe in Bezug auf das mindestens eine ausgewählte Schaltelement der zweiten Gruppe gleichphasig oder phasenverschoben überschneidend oder phasenverschoben versetzt betätigbar ist. Anders ausgedrückt wird das mindestens eine ausgewählte Schaltelement der ersten Gruppe in Bezug auf das mindestens eine ausgewählte Schaltelement der zweiten Gruppe zeitlich gleichphasig bzw. zeitlich parallel, phasenverschoben überschneidend bzw. zeitlich überlappend oder phasenverschoben versetzt betätigt. Getriebe, welche eine derartige "Duo-Synchro-Schaltung" ermöglichen, können sehr kompakt aufgebaut sein.

Die Schaltwelle kann quer zu einer Längsrichtung des Getriebes, insbesondere quer zu einer Eingangs- oder Ausgangswelle des Getriebes, angeordnet sein.

Nach der Erfindung weist die Schaltwelle ein erstes, der ersten Gruppe von Schaltelementen zugeordnetes "Geberelement" und ein zweites, der zweiten Gruppe von Schaltelementen zugeordnetes "Geberelement" auf. Die beiden Geberelemente können mit der Schaltwelle drehgekoppelt oder fest mit der Schaltwelle verbunden sein. Der Begriff "Geberelement" ist äußerst breit zu interpretieren. Gemeint sind ganz allgemein Elemente, welche eine Steuerbewegung (Drehbewegung der Schaltwelle) mittelbar oder unmittelbar auf die zu schaltenden Schaltelemente übertragen.

Beispielsweise kann vorgesehen sein, dass der ersten Gruppe von Schaltelementen mehrere erste "Nehmerelemente" zugeordnet sind, wobei jedes der ersten Nehmerelemente mit mindestens einem Schaltelement der ersten Gruppe gekoppelt ist. In Abhängigkeit von der momentanen Schiebestellung der Schaltwelle wirkt das erste Geberelement der Schaltwelle mit mindestens einem der ersten Nehmerelemente zusammen, und zwar derart, dass eine Drehbewegung der Schaltwelle bzw. des damit gekoppelten ersten Geberelements auf das mindestens eine in der jeweiligen Schiebestellung zugeordnete Nehmerelement der ersten Nehmerelemente und von diesem mindestens einen Nehmerelement auf das mindestens eine damit gekoppelte Schaltelement der ersten Gruppe übertragen wird.

In Bezug auf die zweite Gruppe von Schaltelementen ist die Funktionsweise ganz analog. Der zweiten Gruppe von Schaltelementen sind dementsprechend mehrere zweite Nehmerelemente zugeordnet. Jedes der zweiten Nehmerelemente ist mit mindestens einem Schaltelement der zweiten Gruppe gekoppelt. In Abhängigkeit von der Schiebestellung der Schaltwelle wirkt das zweite Geberelement mit mindestens einem der zweiten Nehmerelemente zusammen und zwar derart, dass eine Drehbewegung der Schaltelemente bzw. des damit gekoppelten zweiten Geberelements auf das der jeweiligen Schiebestellung zugeordnete, mindestens eine Nehmerelement der zweiten Nehmerelemente und von diesem Nehmerelement auf das mindestens eine damit gekoppelte Schaltelement der zweiten Gruppe übertragen wird.

Bei den Nehmerelementen kann es sich beispielsweise um rahmenartige Elemente handeln, die ganz geschlossen oder teilweise offen sein können. Jedes der Nehmerelemente weist eine "Kulissenbahn" auf. Im Falle eines geschlossenen rahmenartigen Nehmerelements kann es sich um eine geschlossene "Innenkulissenbahn" handeln. Die Kulissenbahn eines Nehmerelements wirkt mit dem zugeordneten Geberelement zusammen, derart, dass das Geberelement bei einer Verdrehung der Schaltwelle auf bzw. an der Kulissenbahn entlang gleitet oder dass das Geberelement auf der Kulissenbahn abrollt. Das erste bzw. zweite Geberelement kann z. B. als hebelartiges Element ausgebildet sein. An einem freien Ende des hebelartigen Elements kann ein mit der Kulissenbahn zusammenwirkender Gleitstein angeordnet sein. Alternativ dazu kann an einem Ende des hebelartigen Elements eine Rolle o. ä. angeordnet sein, die bei einem Verdrehen der Schaltwelle auf der Kulissenbahn abrollt und dabei das betreffende Nehmerelement verschiebt.

Das erste bzw. zweite Geberelement kann insbesondere als doppelarmiger Hebel ausgebildet sein. An jedem der beiden freien Enden des doppelarmigen Hebels kann jeweils ein Gleitstein, eine Rolle o. ä. angeordnet sein, die mit einer Kulissenbahn eines Nehmerelements zusammenwirkt.

Die Geberelemente und die Nehmerelemente sind so aufeinander abgestimmt, dass bei einem Verdrehen der Schaltwelle (Ein- bzw. Auslegen eines Ganges) ausgehend von einem Zustand, in dem alle Schaltelemente geöffnet sind (Neutralstellung bzw. Leerlaufstellung) bei allen möglichen Schaltvorgängen stets zuerst ein Schaltelement der ersten Gruppe zu schließen beginnt und erst nach einem begonnenen Schließen eines Schaltelements der ersten Gruppe ein Schaltelement der zweiten Gruppe zu schließen beginnt. Dies ist ganz charakteristisch für eine "Duo-Synchro-Schaltung".

Es kann vorgesehen sein, dass ein Schaltelement der ersten Gruppe mit mindestens zwei ersten Nehmerelementen gekoppelt ist. Dies bedeutet, dass ein Schaltelement der ersten Gruppe in unterschiedlichen Verschiebestellungen der Schaltwelle betätigbar ist. Ganz analog kann vorgesehen sein, dass mindestens ein Schaltelement der zweiten Gruppe mit mindestens zwei zweiten Nehmerelementen gekoppelt ist.

Die ersten Nehmerelemente und die zweiten Nehmerelemente können jeweils in einer ersten bzw. zweiten Reihe hintereinander angeordnet sein.

Wie bereits erwähnt, können die Nehmerelemente z. B. als im Wesentlichen ebene Schieberahmen ausgebildet sein, was eine sehr kompakte, registerartige Anordnung der ersten Nehmerelemente hintereinander und der zweiten Nehmerelemente hintereinander ermöglicht.

Nach einer Weiterbildung der Erfindung weist die Schalteinrichtung einen von Hand betätigbaren Schalthebel auf, der z. B. im Bereich einer Mittelkonsole eines Fahrzeugs angeordnet sein kann. Der Schalthebel ist rein mechanisch mit der Schaltwelle gekoppelt. Ein Verschwenken des Schalthebels in einer Fahrzeugquerrichtung bewirkt eine Verschiebung der Schaltwelle in ihrer Längsrichtung, wodurch einzelne Schaltgassen ausgewählt werden können. Durch Verschwenken des Schalthebels in einer Fahrzeugslängsrichtung kann die Schaltwelle verdreht werden, was, wie bereits erwähnt, ein Ein- bzw Auslegen einzelner Gänge der Schaltgasse ermöglicht.

Betrachtet man das Getriebe von der Getriebeeingangswelle in Richtung der Getriebeausgangswelle, so kann vorgesehen sein, dass die erste Gruppe von Schaltelementen näher in Bezug auf die Getriebeausgangswelle angeordnet ist, als die zweite Gruppe von Schaltelementen. Prinzipiell ist es jedoch auch umgekehrt möglich. Die erste Gruppe von Schaltelementen ("Primär-Synchros") kann in Bezug auf die zweite Gruppe von Schaltelementen ("Sekundär-Synchros") auch näher an der Getriebeeingangswelle angeordnet sein.

Vorzugsweise ist eine Rastierungseinrichtung bzw. vorzugsweise sind mehrere Rastierungseinrichtungen vorgesehen, welche die Schaltwelle in mehreren, den einzelnen Schaltgassen entsprechenden Verschiebestellungen definiert rastieren, was ein "sauberes" Ein- bzw. Auslegen von Gängen ermöglicht.

Im Folgenden wird die Erfindung im Zusammenhang mit der Zeichnung näher erläutert. Es zeigen:
- Figur 1: ein Ausführungsbeispiel eines Siebenganghandschaltgetriebes, das nach dem "Duo-Synchro-Prinzip" schaltbar ist;
- Figur 2: eine Schaltmatrix zur Erläuterung der einzelnen Schaltvorgänge des Getriebes der Fig. 1;
- Figur 3: ein mögliches Schaltschema für das in Figur 1 gezeigte Getriebe;
- Figur 4: das Grundprinzip einer Schalteinrichtung (innere Schaltung) gemäß der Erfindung; und
- Figur 5: das Grundprinzip der Betätigung der einzelnen Schaltrahmen durch die zugeordneten Geberelementen in den einzelnen Gängen.

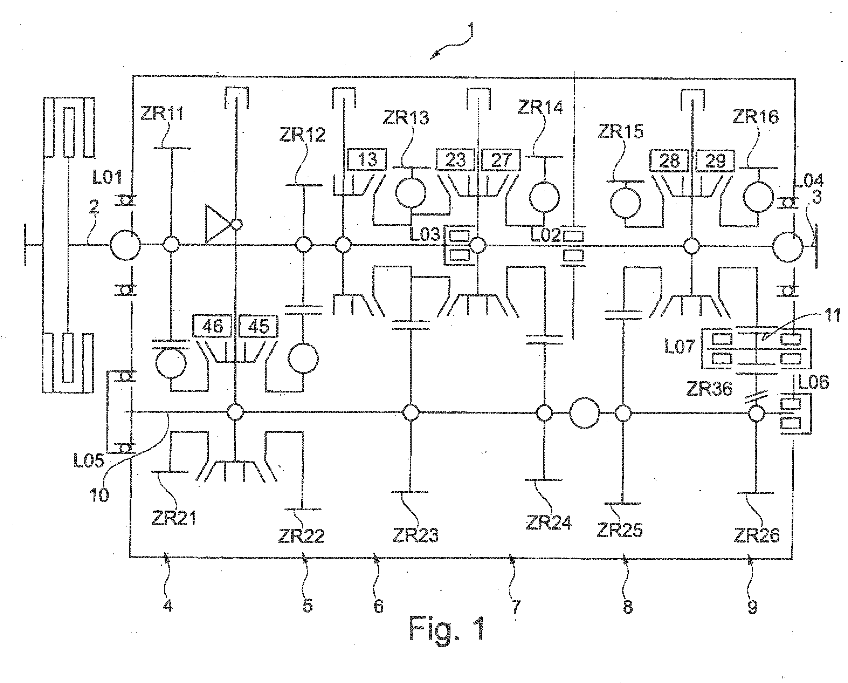

Figur 1 zeigt ein Handschaltgetriebe 1, das eine Getriebeeingangswelle 2 und eine Getriebeausgangswelle 3 aufweist.

Das Handschaltgetriebe 1 weist insgesamt sechs Zahnradebenen 4 - 9 auf.

Die erste Zahnradebene 4 ist durch ein drehfest auf der Getriebeeingangswelle 2 angeordnetes Zahnrad ZR11 und ein damit kämmendes, drehbar auf einer parallel zur Getriebeeingangswelle 2 angeordneten Vorgelegewelle 10 gelagertes Zahnrad ZR21 gebildet.

Die zweite Zahnradebene 5 ist durch die beiden Zahnräder ZR12 und ZR22 gebildet. Das Zahnrad ZR12 ist drehfest auf der Getriebeeingangswelle 2 angeordnet und kämmt mit dem Zahnrad ZR22, welches drehbar auf der Vorgelegewelle 10 angeordnet ist.

Die dritte Zahnradebene ist durch die beiden Zahnräder ZR13 und ZR23 gebildet. Das Zahnrad ZR13 ist drehbar auf der Getriebeeingangswelle 2 angeordnet. Es kämmt mit dem Zahnrad ZR23, welches drehfest auf der Vorgelegewelle 10 angeordnet ist.

Die vierte Zahnradebene 7 ist durch die beiden Zahnräder ZR14 und ZR24 gebildet. Das Zahnrad ZR14 ist drehbar auf der Getriebeausgangswelle 3 angeordnet und kämmt mit dem Zahnrad ZR24, welches drehfest auf der Vorgelegewelle 10 angeordnet ist.

Die fünfte Zahnradebene ist durch die beiden Zahnräder ZR15 und ZR25 gebildet. Das Zahnrad ZR15 ist drehbar auf der Getriebeausgangswelle 3 angeordnet und kämmt mit dem Zahnrad ZR25, welches drehfest auf der Vorgelegewelle 10 angeordnet ist.

Die sechste Zahnradebene ist durch die beiden Zahnräder ZR16 und ZR26 gebildet. Das Zahnrad ZR16 ist drehbar auf der Getriebeausgangswelle 3 angeordnet und kämmt mit einem Zwischenrad 11, welches wiederum mit dem Zahnrad ZR26 kämmt, das drehfest auf der Vorgelegewelle 10 angeordnet ist.

Bei den drehbar auf ihren jeweiligen Wellen angeordneten Zahnrädern ZR21, ZR22, ZR13, ZR14, ZR15, ZR16 handelt es sich um schaltbare Zahnräder, d. h. um Zahnräder, die durch Betätigen eines zugeordneten Schaltelements, das z. B. durch eine Schiebemuffe gebildet sein kann, drehfest mit der betreffenden Welle gekoppelt werden können. Ein derartiges Schaltelement besteht beispielsweise aus einer Schiebemuffe und einer Synchronisationseinrichtung nach dem Borg-Warner-Prinzip mit einem Ein-, Zwei- oder Drei-Reibkonus-System und entsprechend ausgestalteter Kupplungsverzahnung. Über ein derartiges Schaltelement kann ein drehbar auf einer Welle gelagertes Zahnrad mit der Welle synchronisiert und nach dem Synchronisieren mit der Welle drehgekoppelt werden.

So kann das Zahnrad ZR21 in Eingriff mit dem Schaltelement 46 gebracht werden und somit mit der Vorgelegewelle 10 drehgekoppelt werden. Das Zahnrad ZR22 kann in Eingriff mit dem Schaltelement 45 gebracht werden und somit mit der Vorgelegewelle 10 drehgekoppelt werden.

Das Zahnrad ZR13 kann wahlweise mit dem Schaltelement 13 in Eingriff gebracht und somit mit der Getriebeeingangswelle 2 drehgekoppelt werden und/oder mit dem Schaltelement 23 in Eingriff gebracht werden und somit mit der Getriebeausgangswelle 3 drehgekoppelt werden. Wird das Zahnrad ZR13 gleichzeitig mit den beiden Schaltelementen 13 und 23 in Eingriff gebracht, so wird hierdurch die Getriebeeingangswelle 2 direkt mit der Getriebeausgangswelle 3 drehgekoppelt (Direktgang).

Das Zahnrad ZR14 kann mit dem Schaltelement 27 in Eingriff gebracht und somit mit der Getriebeausgangswelle 3 drehgekoppelt werden. Das Zahnrad ZR15 kann mit dem Schaltelement 28 in Eingriff und somit mit der Getriebeausgangswelle 3 drehgekoppelt werden. Das Zahnrad ZR16 kann mit dem Schaltelement 29 in Eingriff und somit mit der Getriebeausgangswelle 3 drehgekoppelt werden.

Wie aus Figur 1 ersichtlich ist, sind bei dem dort gezeigten Handschaltgetriebe 1 sowohl auf der Getriebeeingangswelle 2 als auch auf der Getriebeausgangswelle 3 wie auch auf der Vorgelegewelle 10 jeweils einzelne Zahnräder schaltbar, nämlich die bereits mehrfach erwähnten Zahnräder ZR21, ZR22, ZR13, ZR14, ZR15 und ZR16.

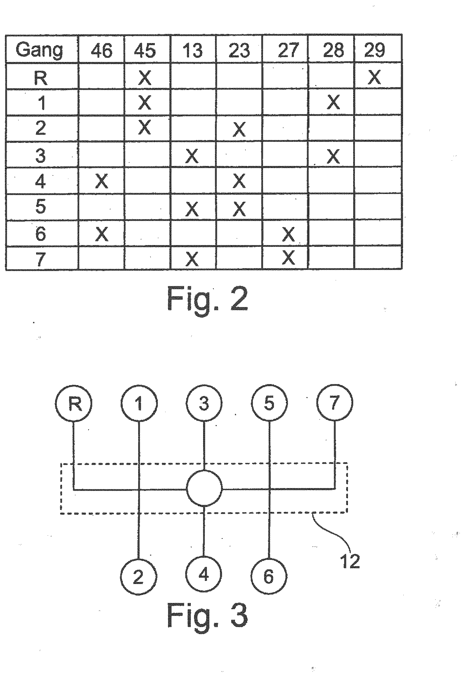

Mit dem in Figur 1 gezeigten Handschaltgetriebe 1 können sieben Vorwärtsgänge (Gänge 1 bis 7) und ein Rückwärtsgang R dargestellt werden. Die in Figur 2 gezeigte Schaltmatrix erläutert für die einzelnen Schaltzustände bzw. Gänge den Schaltzustand der Schaltelemente 13, 23, 27, 28, 29, 45 und 46. Ein "X" bedeutet, dass das jeweilige Schaltelement geschlossen ist, d. h. dass es mit dem zugeordneten Zahnrad in Eingriff steht. Leere Tabellenfelder bedeuten, dass die jeweiligen Schaltelemente geöffnet sind.

Wie oben bereits erwähnt, stehen in jedem Gang genau zwei Schaltelemente in Eingriff. Alle übrigen Schaltelemente sind geöffnet. Für das Einlegen eines Ganges gibt es eine "definierte Schaltreihenfolge", die sich dadurch auszeichnet, dass
a) Entweder zuerst das in Kraftflussrichtung dem Getriebeausgang näher liegende Schaltelement der beiden für einen bestimmten Gang zu schließenden Schaltelemente zuerst geschlossen wird und danach das dem Getriebeeingang näher liegende Schaltelement der beiden für einen bestimmten Gang zu schließenden Schaltelemente, oder
b) umgekehrt.

Zum Einlegen des Rückwärtsgangs müssen die beiden Schaltelemente 45 und 29 geschlossen werden, wobei nach Fall a) (s.o.) zuerst das Schaltelement 29 und erst anschließend das Schaltelement 45 geschlossen wird bzw. nach Fall b) zuerst das Schaltelement 45 und erst anschließend das Schaltelement 29 geschlossen wird. Im Rückwärtsgang wird Drehmoment von der Getriebeeingangswelle 2 über das Zahnrad ZR12 auf das Zahnrad ZR22 und von diesem über das Schaltelement 45 auf die Vorgelegewelle 10 übertragen. Von der Vorgelegewelle 10 wird Drehmoment über das Zahnrad ZR26 auf das Zwischenrad 11 und von diesem auf das Zahnrad 16 und weiter über das Schaltelement 29 auf die Getriebeeingangswelle 3 übertragen.

Zum Einlegen des ersten Ganges müssen die beiden Schaltelemente 45 und 28 geschlossen werden, wobei auch hier zunächst das der Getriebewelle 3 "nähere" Schaltelement 28 geschlossen wird und erst danach das Schaltelement 45. Im ersten Gang wird das Drehmoment von der Getriebeeingangswelle 2 über die Zahnräder ZR12 und ZR22 sowie das Schaltelement 45 auf die Vorgelegewelle 10 und von dieser über die Zahnräder ZR25 und ZR15 sowie das Schaltelement 28 auf die Getriebeausgangswelle 3 übertragen.

Zum Einlegen des zweiten Ganges müssen die Schaltelemente 45 und 23 geschlossen werden, wobei hier zunächst das Schaltelement 23 und anschließend das Schaltelement 45 geschlossen wird. Im zweiten Gang wird Drehmoment von der Getriebeeingangswelle 2 über die Zahnräder ZR12 und ZR 22 sowie das Schaltelement 45 auf die Vorgelegewelle 10 und von dieser über die Zahnräder ZR23 und ZR13 sowie das Schaltelement auf die Getriebeausgangswelle 3 übertragen.

Zum Einlegen des dritten Ganges müssen die Schaltelemente 13 und 28 geschlossen werden, wobei zunächst das Schaltelement 28 und erst anschließend das Schaltelement 13 geschlossen wird. Im dritten Gang wird Drehmoment von der Getriebeeingangswelle 2 über das Schaltelement 13 auf das Zahnrad ZR13 und von diesem auf das Zahnrad ZR23 übertragen. Das Zahnrad ZR23 ist mit der Vorgelegewelle 10 drehgekoppelt. Somit wird Drehmoment weiter über die Zahnräder ZR25 und ZR15 und das Schaltelement 28 auf die Getriebeausgangswelle 3 übertragen.

Zum Einlegen des vierten Ganges müssen die Schaltelemente 46 und 23 geschlossen werden, wobei zunächst das Schaltelement 23 und anschließend das Schaltelement 46 geschlossen wird. Im vierten Gang wird Drehmoment von der Getriebeeingangswelle 2 über die Zahnräder ZR11 und ZR21 sowie das Schaltelement 46 auf die Vorgelegewelle 10 und von dieser über die Zahnräder ZR23 und ZR13 sowie das Schaltelement 23 auf die Getriebeausgangswelle 3 übertagen.

Zum Einlegen des fünften Ganges müssen die Schaltelemente 13 und 23 geschlossen werden, wobei zunächst das Schaltelement 23 und anschließend das Schaltelement 13 geschlossen wird. Im fünften Gang wird Drehmoment von der Getriebeeingangswelle 2 über das Schaltelement 13 auf das Zahnrad ZR13 und von über das Schaltelement 23 direkt auf die Getriebeausgangwelle 3 übertragen (Direktgang).

Zum Einlegen des sechsten Ganges müssen die beiden Schaltelemente 46 und 27 geschlossen werden, wobei zunächst das Schaltelement 27 und anschließend das Schaltelement 46 geschlossen wird. Im sechsten Gang wird Drehmoment von der Getriebeeingangswelle 2 über die Zahnräder ZR11 und ZR22 sowie das Schaltelement 46 auf die Vorgelegewelle 10 und von dieser über die Zahnräder ZR24, ZR14 und das Schaltelement 27 auf die Getriebeausgangswelle 3 übertragen.

Zum Einlegen des siebten Ganges müssen die Schaltelemente 13 und 27 geschlossen werden, wobei zunächst das Schaltelement 27 und anschließend das Schaltelement 13 geschlossen wird. Im siebten Gang wird Drehmoment von der Getriebeeingangswelle über das Schaltelement 13 auf das Zahnrad ZR13 und von über das Zahnrad ZR23 auf die Vorgelegewelle 10 übertragen. Von der Vorgelegewelle 10 wird Drehmoment über die Zahnräder ZR24 und ZR14 und das Schaltelement 27 auf die Getriebeausgangswelle 3 übertragen.

Figur 3 zeigt ein klassisches "H-Schaltschema", wobei der Rückwärtsgang R links vorne und der siebte Gang rechts vorne liegt. Die Gangpaare 1, 2 bzw. 3, 4 bzw. 5, 6 liegen jeweils in einer Schaltgasse hintereinander.

Soll ein Gang ausgelegt und ein anderer Gang eingelegt werden, so müssen zunächst die beiden momentan geschlossenen Schaltelemente geöffnet werden. Es wird also zunächst in einen Leerlaufzustand geschaltet, in dem alle Schaltelemente geöffnet sind. Anschließend werden in der oben erläuterten Reihenfolge die beiden Schaltelemente des gewünschten Zielgangs eingelegt.

Es kann vorgesehen sein, dass der Leerlaufzustand bereits erreicht wird, wenn der Schalthebel von einem momentan eingelegten Gang in die Mittelschaltgasse (vgl. Figur 3) bewegt wird. Zum Einlegen des Leerlaufzustandes muss der Schalthebel also nicht notwendigerweise in die mit N gekennzeichnete Mittelstellung verschwenkt werden. Es genügt, wenn der Schalthebel von einem zuletzt eingelegten Gang in die gestrichelt gekennzeichnete Mittelschaltgasse 12 ausgerückt wird.

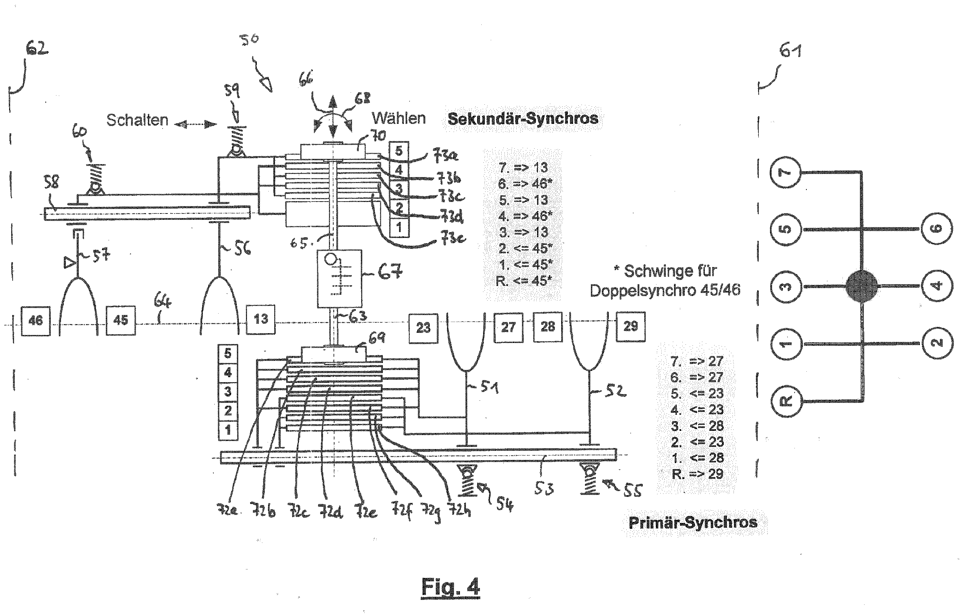

Figur 4 zeigt eine Schalteinrichtung 50, die zum Schalten der Schaltelemente 13, 23, 27, 28, 29, 45 und 46 vorgesehen ist. Die hier nur schematisch durch Quadrate angedeuteten Schaltelemente 23, 27, 28, 29 bilden eine erste Gruppe von Schaltelementen, die auch als "Primär-Synchros" bezeichnet werden. Die Schaltelemente 13, 45, und 46 bilden eine zweite Gruppe von Schaltelementen, die auch als "Sekundär-Synchros" bezeichnet werden. Bei den einzelnen Schaltelementen kann es sich z. B. um Schiebemuffen handeln, denen jeweils eine hier nicht näher dargestellte Synchronisierungseinrichtung zugeordnet sein kann.

Wie aus Figur 4 ersichtlich ist, können die beiden Primär-Synchros 23 und 27 durch eine gemeinsame Schaltgabel bzw. Schaltschwinge 51 und die beiden Primär-Synchros 28 und 29 durch eine Schaltgabel bzw. Schaltschwinge 52 betätigt werden. Im Falle von Schaltgabeln können die beiden Schaltgabeln 51, 52 entlang einer Schaltgabelachse 53 verschoben werden.

Wie aus Figur 4 ersichtlich ist, ist jeder der beiden Schaltgabeln 51, 52 jeweils ein Rastierungselement 54 bzw. 55 zugeordnet. Wenn sich die Schaltgabel 51 in ihrer Mittelstellung befindet, in der sowohl das Schaltelement 23 als auch das Schaltelement 27 geöffnet ist, wird die Schaltgabel 51 durch das Rastierungselement 54 in dieser Mittelstellung gehalten. Wird die Schaltgabel 51 nach links bzw. rechts verschoben, was zum Schließen des Schaltelements 23 bzw. des Schaltelements 27 führt, so drückt das Rastierungselement 54 die Schaltgabel 51 stabil in die betreffende Schließstellung des Schaltelements 23 bzw. 27. In gleicher Weise funktioniert das Rastierungselement 55.

Die Sekundär-Synchros 13, 45, 46 können ebenfalls durch Schaltschwingen 56, 57 oder durch Schaltgabeln betätigt werden, die entlang einer Schaltachse 58 verschiebbar bzw. verschwenkbar angeordnet sind. Dem Schaltelement 13 ist die Schaltgabel 56 zugeordnet. Den beiden Schaltelementen 45, 46 ist die Schaltschwinge 57 zugeordnet. Der Schaltschwinge 56 wiederum ist das Rastierungselement 59 zugeordnet. Der Schaltschwinge 57 ist das Rastierungselement 60 zugeordnet.

Wie bereits erwähnt, werden die Schaltelemente 23, 27, 28, 29 als Primär-Synchros und die Schaltelemente 13, 45, 46 als Sekundär-Synchros bezeichnet. Die Primärsynchros zeichnen sich dadurch aus, dass ausgehend von einer Leerlaufstellung, in der alle Schaltelemente geöffnet sind, beim Einlegen eines Ganges stets zunächst ein Schaltelement der Primär-Synchros zu schließen beginnt und erst nachdem ein Schaltelement der Primär-Synchros zu schließen begonnen hat, ein Schaltelement der Sekundär-Synchros zu schließen beginnt. Bei dem hier gezeigten Ausführungsbeispiel ist die erste Gruppe von Schaltelementen (gebildet durch die Primär-Synchros) näher einem Getriebeausgang 61 zugeordnet als die zweite Gruppe von Schaltelementen (gebildet durch die Sekundär-Synchros), welche näher einem Getriebeeingang 62 zugeordnet sind. Dies muss aber nicht so sein. Prinzipiell ist es auch umgekehrt möglich, d. h. die Primärsynchros könnten getriebeeingangsseitig angeordnet sein und die Sekundär-Synchros getriebausgangsseitig.

Im Folgenden wird auf Einzelheiten der inneren Schaltung, d. h. auf die Betätigung der einzelnen Schaltgabeln 51, 52, 56 und der Schaltschwinge 57 und somit auf die Betätigung der einzelnen Schaltelemente 23, 27, 28, 29, 13, 45, 46 näher eingegangen.

Zentrales Element der inneren Schaltung ist eine Schaltwelle 63, die bei dem hier gezeigten Ausführungsbeispiel quer zu einer Längsrichtung 64 des Getriebes angeordnet ist. Die Schaltwelle 63 weist eine Längsachse 65 auf, entlang der sie verschoben werden kann, was durch den Doppelpfeil 66 angedeutet ist. Die Schaltwelle 63 kann in verschiedene vorgegebene Verschiebestellungen verschoben werden, entsprechend den einzelnen Schaltgassen des in Figur 3 gezeigten H-Schaltschemas. Um sicherzustellen, dass bei einem Verschieben der Schaltwelle 63 sauber einzelne Schaltgassen erreicht werden, ist eine entsprechende Rastierungseinrichtung 67 vorgesehen.

Zusätzlich zu dem Verschiebefreiheitsgrad entlang der Längsachse 65 kann die Schaltwelle 63 um ihre Längsachse 65 gedreht werden, was durch den Doppelpfeil 68 angedeutet ist. Das Drehen der Schaltwelle 63 bewirkt ein Ein- bzw. Auslegen einzelner Schaltelemente der ersten bzw. zweiten Gruppe von Schaltelementen.

An jedem der beiden Enden der Schaltwelle 63 ist jeweils ein Geberelement angeordnet, wobei das eine Geberelement, welches der ersten Gruppe von Schaltelementen zugeordnet ist, als erstes Geberelement 69 und das andere Geberelement, welches der zweiten Gruppe von Schaltelementen zugeordnet ist, als zweites Geberelement 70 bezeichnet wird.

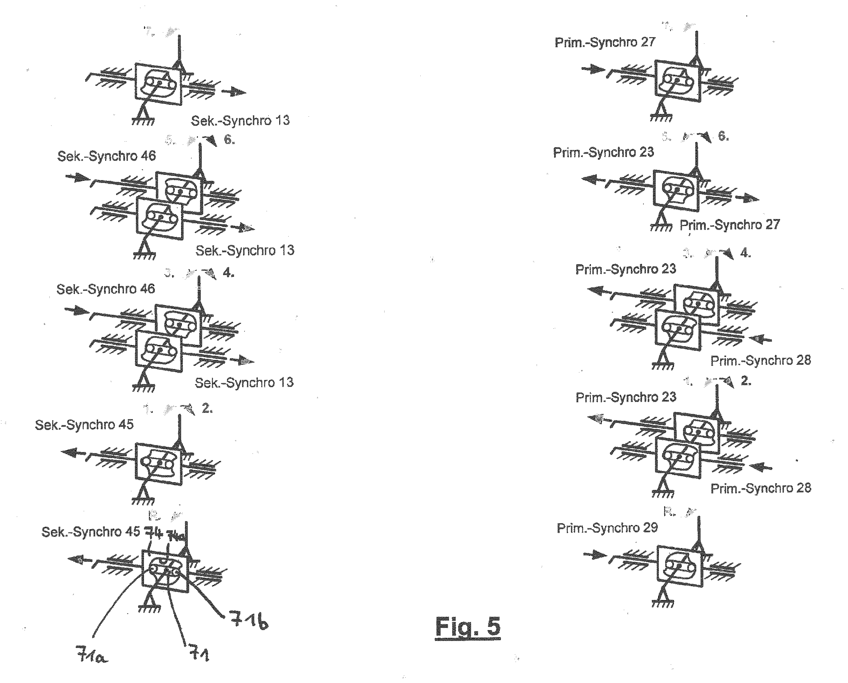

Wie in Zusammenhang mit Figur 5 noch näher erläutert wird, kann es sich bei den Geberelementen z. B. jeweils um einen doppelarmigen Hebel 71 handeln (vgl. Figur 5), an dessen Enden jeweils eine Geberrolle 71a, 71b drehbar angeordnet ist.

Wie aus Figur 4 ersichtlich ist, sind der ersten Gruppe von Schaltelementen mehrere registerartig hintereinander angeordnete Schieberahmen 72a, 72b, 72c, 72d, 72e, 72f, 72g, 72h zugeordnet.

Der zweiten Gruppe von Schaltelementen sind in gleicher Weise mehrere registerartig hintereinander angeordnete Nehmerelemente 73a, 73b, 73c, 73d, 73e zugeordnet.

Bei den ersten bzw. zweiten Nehmerelementen kann es sich jeweils um einen sogenannten Schieberahmen 74 handeln, der jeweils eine Innenkulisse 74a aufweist, an welcher die Rollen 71a, 71b des zugeordneten Geberelements 69 bzw. 70 anliegen (vgl. Fig. 5). Ein Verdrehen der Schaltwelle 63 und somit der Geberelemente 69 bzw. 70 bewirkt ein Abrollen der Rollen 71a, 71b auf der Innenkulissenbahn des Schieberahmens 74. Dies wiederum bewirkt ein seitliches Verschieben des betreffenden Schieberahmens in seiner Längsrichtung, d. h. parallel zur Längsachse 64 des Getriebes.

Wie aus Figur 4 ersichtlich ist, sind die Nehmerelemente 72a, 72b, 72c, 72d und 72 f mit der Schaltgabel 51 verbunden. Die Nehmerelemente 72 e, 72g und 72h sind mit der Schaltgabel 52 verbunden.

Betrachtet man die der ersten Gruppe von Schaltelementen zugeordneten Nehmerelemente, so ist ersichtlich, dass die Nehmerelemente 73a, 73c und 73e mit der Schaltgabel 56 verbunden sind. Die Nehmerelemente 73b und 73d sind mit der Schaltschwinge 57 verbunden.

Wie bereits mehrfach erwähnt, kann durch Verschieben der Schaltwelle 63 in eine ihrer vorgegebenen Stellungen eine bestimmte Schaltgasse angewählt werden. Ein Verschieben der Schaltwelle 63 führt dazu, dass die Geberelemente 69, 70 entsprechend mitverschoben werden. Je nach Schaltstellung der Schaltwelle 63 greifen die Geberelemente 69, 70 in zugeordnete Nehmerelemente ein. In der in Figur 1 gezeigten Verschiebestellung der Schaltwelle 63, welche der Schaltgasse des siebten Vorwärtsganges entspricht (vgl. Figur 3) greift das Geberelement 69 in die Innenkulissenbahn des Nehmerelements 72a ein. Das zweite Geberelement 70 greift in die Innenkulissenbahn des Nehmerelements 73a ein. Durch nach unten Verschieben der Schaltwelle 63 können andere Schaltgassen angewählt werden.

Aus den in Figur 4 enthaltenen Schalttabellen ist ersichtlich, welche Schaltelemente bei Einlegen einzelner Gänge in welche Schaltrichtungen geschaltet werden müssen. Soll beispielsweise der vierte Gang eingelegt werden, so muss zunächst die Schaltwelle 63 in die dem dritten und vierten Gang zugeordnete Schaltgasse verschoben werden. Ist die Schaltgasse erreicht, so wird die Schaltwelle 63 gedreht und zwar derart, dass zunächst das Schaltelement 23 und zeitlich versetzt dazu das Schaltelement 46 geschlossen wird. Das Schaltelement 23 wird durch nach links Verschieben der Schaltgabel 51 geschlossen. Das Schaltelement 46 wird durch Verschieben der Schaltschwinge 57 geschlossen.

Weitere Einzelheiten, welche Schaltrahmen beim Ein- bzw. Auslegen einzelner Gänge in welcher Weise verschoben werden, sind aus Figur 5 ersichtlich. Die Schaltelemente werden über die Konturierung der "Kulissen-Innenbahn" kinematisch gesteuert. Eine Schaltbewegung x am Schaltknauf wird in eine Drehbewegung ϕ der Schaltwelle und dann in die Stellbewegung der Schieberahmen an einer "Primär-Synchro (y1)" und an einer "Sekundär-Synchro (y2)" übersetzt. Während y1 schon mit einer Übersetzung > 1 beginnt ist y2 noch bei Null und setzt entsprechend einer konstruktiv vorgegebenen Gesetzmäßigkeit später ein. Nachdem die Schaltbewegung beendet ist, sind beide "Synchros" in den Kupplungsverzahnungen an ihrem jeweiligen Endanschlag angekommen.

## Patentansprüche

1. Schalteinrichtung (50) zum Schalten eines Getriebes (1), mit
- einer ersten Gruppe von Schaltelementen (23, 27, 28, 29) und
- einer zweiten Gruppe von Schaltelementen (13,45, 46),
- einer Schaltwelle (63), die entlang einer Längsachse (65) verschiebbar und um die Längsachse (65) drehbar angeordnet ist, wobei durch Verschieben der Schaltwelle (63) in eine von mehreren möglichen Verschiebestellungen mindestens ein Schaltelement (23, 27, 28, 29) der ersten Gruppe und mindestens ein Schaltelement (13, 45, 46) der zweiten Gruppe anwählbar und durch Drehen der Schaltwelle (63) die angewählten Schaltelemente betätigbar sind, wobei das mindestens eine angewählte Schaltelement der ersten Gruppe in Bezug auf das mindestens eine angewählte Schaltelement der zweiten Gruppegleichphasig oder phasenverschoben überschneidend oder phasenverschoben versetzt betätigbar ist, wobei
- die Schaltwelle (63) ein erstes, der ersten Gruppe von Schaltelementen (23, 27, 28, 29) zugeordnetes Geberelement (69) aufweist und ein zweites, der zweiten Gruppe von Schaltelementen (13, 45, 46) zugeordnetes Geberelement (70), wobei die beiden Geberelemente (69, 70) mit der Schaltwelle (63) drehgekoppelt bzw. fest mit der Schaltwelle (63) verbunden sind,
**dadurch gekennzeichnet, dass**
- der zweiten Gruppe von Schaltelementen (13, 45, 46) mehrere zweite Nehmerelemente (73a - 73e) zugeordnet sind, wobei jedes der zweiten Nehmerelemente (73a - 73e) mit mindestens einem Schaltelement (13, 45, 46) der zweiten Gruppe gekoppelt ist, und das zweite Geberelement (70) in Abhängigkeit von der Schiebstellung der Schaltwelle (63) mit einem der zweiten Nehmerelemente (73 - 73e) zusammenwirkt, derart, dass eine Drehbewegung der Schaltwelle (63) und des damit gekoppelten zweiten Geberelements (70) auf das der jeweiligen Schiebestellung zugeordnete Nehmerelement der zweiten Nehmerelemente (73a - 73e) und von diesem Nehmerelement auf das mindestens eine damit gekoppelte Schaltelement (13, 45, 46) der zweiten Gruppe übertragen wird und
- die Geberelemente (69, 70) und die Nehmerelemente (72a - 72h, 73a - 73e) so aufeinander abgestimmt sind, dass bei einem Verdrehen der Schaltwelle, ausgehend von einem Zustand, in dem alle Schaltelemente (23, 27, 28, 29, 13, 45, 46) geöffnet sind, bei allen möglichen Schaltvorgängen stets zuerst ein Schaltelement (23, 27, 28, 29) der ersten Gruppe zu schließen beginnt und erst nach einem begonnenen Schließen eines Schaltelements (23, 27, 28, 29) der ersten Gruppe ein Schaltelement (13, 45, 46) der zweiten Gruppe zu schließen beginnt.

2. Schalteinrichtung nach Anspruch 1, **dadurch gekennzeichnet, dass** die Schaltwelle (63) quer zu einer Längsrichtung (64) des Getriebes (1), insbesondere quer zu einer Eingangs- oder Ausgangswelle des Getriebes (1) angeordnet ist.

3. Schalteinrichtung nach Anspruch 1 oder 2, **dadurch gekennzeichnet, dass** der ersten Gruppe von Schaltelementen (23, 27, 28, 29) mehrere erste Nehmerelemente (72a - 72h) zugeordnet sind, wobei jedes der ersten Nehmerelemente (72 - 72h) mit mindestens einem Schaltelement (23, 27, 28, 29) der ersten Gruppe gekoppelt ist, und das erste Geberelement (69) in Abhängigkeit von der. Schiebstellung der Schaltwelle (63) mit einem der ersten Nehmerelemente (72a, - 72h) zusammenwirkt, derart, dass eine Drehbewegung der Schaltwelle (63) und des damit gekoppelten ersten Geberelements (69) auf das der jeweiligen Schiebestellung der Schaltwelle (63) zugeordnete Nehmerelement der ersten Nehmerelemente (72a - 72h) und von diesem Nehmerelement auf das mindestens eine damit gekoppelte Schaltelement (23, 27, 28, 29) der ersten Gruppe übertragen wird.

4. Schalteinrichtung nach einem der Ansprüche 1 bis 3, **dadurch gekennzeichnet, dass** die Nehmerelemente (72a - 72h, 73a - 73e) jeweils eine Kulissenbahn (74a) aufweisen, an der das zugeordnete erste bzw. zweite Geberelement (69, 70) entlang gleitet oder auf der das zugeordnete erste bzw. zweite Geberelement (69, 70) abrollt, wodurch das zugeordnete Nehmerelement (72a - 72h, 73a - 73e) verschiebbar ist.

5. Schalteinrichtung nach einem der Ansprüche 1 bis 4, **dadurch gekennzeichnet, dass** das erste Geberelement (69) und/oder das zweite Geberelement (70) einen Hebelarm aufweist, an dem eine Rolle (71a, 71b) drehbar angeordnet ist, welche an der Kulissenbahn (74a) eines der ersten bzw. zweiten Nehmerelemente (72a - 72h, 73a - 73e) anliegt.

6. Schalteinrichtung nach Anspruch 5, **dadurch gekennzeichnet, dass** der Hebelarm doppelarmig ausgebildet ist, wobei an jedem der beiden Armenden eine Rolle (71a, 71b) drehbar angeordnet ist.

7. Schalteinrichtung nach einem der Ansprüche 1 bis 6, **dadurch gekennzeichnet, dass** mindestens ein Schaltelement (23, 27, 28, 29) der ersten Gruppe mit mindestens zwei ersten Nehmerelementen (72a - 72h) gekoppelt ist.

8. Schalteinrichtung nach einem der Ansprüche 1 bis 7, **dadurch gekennzeichnet, dass** mindestens ein Schaltelement der zweiten , Gruppe (13, 45, 46) mit mindestens zwei zweiten Nehmerelementen (73a - 73e) gekoppelt ist.

9. Schalteinrichtung nach einem der Ansprüche 1 bis 8, **dadurch gekennzeichnet, dass** die ersten Nehmerelemente (72a - 72h) in einer ersten Reihe hintereinander angeordnet sind.

10. Schalteinrichtung nach einem der Ansprüche 1 bis 9, **dadurch gekennzeichnet, dass** die zweiten Nehmerelemente (73a - 73e) in einer zweiten Reihe hintereinander angeordnet sind.

11. Schalteinrichtung nach einem der Ansprüche 1 bis 10, **dadurch gekennzeichnet, dass** ein von Hand betätigbarer Schalthebel vorgesehen ist, der rein mechanisch mit der Schaltwelle gekoppelt ist, wobei durch ein Verschwenken des Schalthebels in einer Fahrzeugquerrichtung (65) die Schaltwelle (63) in einzelne Schaltgassen verschiebbar ist und durch ein Verschwenken des Schalthebels in einer Fahrzeugslängsrichtung (74) die Schaltwelle verdrehbar ist.

12. Schalteinrichtung nach einem der Ansprüche 1 bis 11, **dadurch gekennzeichnet, dass** die erste Gruppe von Schaltelementen (23, 27, 28, 29) in Bezug auf die zweite Gruppe von Schaltelementen (13, 45, 46) dem Getriebeausgang (61) zugewandt ist, oder umgekehrt.

13. Schalteinrichtung nach einem der Ansprüche 1 bis 12, **dadurch gekennzeichnet, dass** eine Rastierungseinrichtung (67) vorgesehen ist, welche mehrere, einzelnen Schaltgassen entsprechende Verschiebestellungen der Schaltwelle (63) definiert.

## Claims

1. A gear-change device (50) for changing gears in a gearbox (1), with
- a first group of gear-change elements (23, 27, 28, 29) and
- a second group of gear-change elements (13, 45, 46),
- a gearshift shaft (63) which is arranged to be displaceable along a longitudinal axis (65) and rotatable about the longitudinal axis (65), wherein at least one gear-change element (23, 27, 28, 29) of the first group and at least one gear-change element (13, 45, 46) of the second group can be selected by displacing the gearshift shaft (63) into one of a plurality of possible displacement positions and the selected gear-change elements can be actuated by turning the gearshift shaft (63), wherein the at least one selected gear-change element of the first group can be actuated in phase or with an overlapping or offset phase shift in relation to the at least one selected gear-change element of the second group, wherein
- the gearshift shaft (63) has a first master element (69), associated with the first group of gear-change elements (23, 27, 28, 29), and a second master element (70), associated with the second group of gear-change elements (13, 45, 46), wherein the two master elements (69, 70) are rotationally coupled with the gearshift shaft (63) or are connected fixedly to the gearshift shaft (63),
**characterised in that**
- a plurality of second slave elements (73a - 73e) are associated with the second group of gear-change elements (13, 45, 46), with each of the second slave elements (73a - 73e) being coupled with at least one gear-change element (13, 45, 46) of the second group, and the second master element (70), dependent on the sliding position of the gearshift shaft (63), cooperating with one of the second slave elements (73 - 73e) in such a way that a rotary motion of the gearshift shaft (63) and of the second master element (70) coupled therewith is transmitted to that slave element of the second slave elements (73a - 73e) which is associated with the respective sliding position, and from this slave element to the at least one gear-change element (13, 45, 46) of the second group which is coupled therewith, and
- the master elements (69, 70) and the slave elements (72a - 72h, 73a - 73e) are matched to each other such that upon turning of the gearshift shaft, starting from a state in which all the gear-change elements (23, 27, 28, 29, 13, 45, 46) are opened, for all possible gear-change operations always first a gear-change element (23, 27, 28, 29) of the first group begins to close and only after the closing of a gear-change element (23, 27, 28, 29) of the first group has begun does a gear-change element (13, 45, 46) of the second group begin to close.

2. A gear-change device according to Claim 1, **characterised in that** the gearshift shaft (63) is arranged transversely to a longitudinal direction (64) of the gearbox (1), especially transversely to an input shaft or output shaft of the gearbox (1).

3. A gear-change device according to Claim 1 or Claim 2, **characterised in that** a plurality of first slave elements (72a - 72h) are associated with the first group of gear-change elements (23, 27, 28, 29), with each of the first slave elements (72 - 72h) being coupled with at least one gear-change element (23, 27, 28, 29) of the first group, and the first master element (69), dependent on the sliding position of the gearshift shaft (63), cooperating with one of the first slave elements (72a - 72h) in such a way that a rotary motion of the gearshift shaft (63) and of the first master element (69) coupled therewith is transmitted to that slave element of the first slave elements (72a - 72h) which is associated with the respective sliding position of the gearshift shaft (63), and from this slave element to the at least one gear-change element (23, 27, 28, 29) of the first group which is coupled therewith.

4. A gear-change device according to one of Claims 1 to 3, **characterised in that** the slave elements (72a - 72h, 73a - 73e) have in each case a slotted guide link (74a), along which the associated first or second master element (69, 70) slides or on which the associated first or second master element (69, 70) rolls, by means of which the associated slave element (72a - 72h, 73a - 73e) is displaceable.

5. A gear-change device according to one of Claims 1 to 4, **characterised in that** the first master element (69) and/or the second master element (70) has a lever arm, on which a roller (71a, 71b) which lies against the slotted guide link (74a) of one of the first or second slave elements (72a - 72h, 73a - 73e) is rotatably arranged.

6. A gear-change device according to Claim 5, **characterised in that** the lever arm is of double-armed design, with a roller (71a, 71b) being rotatably arranged on each of the two arm ends.

7. A gear-change device according to one of Claims 1 to 6, **characterised in that** at least one gear-change element (23, 27, 28, 29) of the first group is coupled with at least two first slave elements (72a - 72h).

8. A gear-change device according to one of Claims 1 to 7, **characterised in that** at least one gear-change element of the second group (13, 45, 46) is coupled with at least two second slave elements (73a - 73e).

9. A gear-change device according to one of Claims 1 to 8, **characterised in that** the first slave elements (72a - 72h) are arranged in a first row one behind another.

10. A gear-change device according to one of Claims 1 to 9, **characterised in that** the second slave elements (73a - 73e) are arranged in a second row one behind another.

11. A gear-change device according to one of Claims 1 to 10, **characterised in that** a manually actuatable gear lever is provided which is coupled purely mechanically with the gearshift shaft, with the gearshift shaft (63) being displaceable into individual shift gates by pivoting the gear lever in a transverse direction (65) of the vehicle and the gearshift shaft being able to be turned by pivoting the gear lever in a longitudinal direction (74) of the vehicle.

12. A gear-change device according to one of Claims 1 to 11, **characterised in that** the first group of gear-change elements (23, 27, 28, 29) in relation to the second group of gear-change elements (13, 45, 46) faces the gearbox output (61), or vice versa.

13. A gear-change device according to one of Claims 1 to 12, **characterised in that** a detent means (67) is provided which defines a plurality of displacement positions of the gearshift shaft (63) which correspond to individual shift gates.

## Revendications

1. Dispositif de commutation (50) d'une boîte de vitesse (1) comprenant:
- un premier groupe d'éléments de commutation (23, 27, 28, 29), et
- un second groupe d'éléments de commutation (13, 45, 46),
- un arbre de commutation (63) qui est monté coulissant le long d'un axe longitudinal (65) et mobile en rotation autour de cet axe longitudinal (65), le coulissement de l'arbre de commutation (63) dans une position de coulissement parmi plusieurs positions de coulissement possibles permettant de sélectionner, au moins un élément de commutation (23, 27, 28, 29) du premier groupe et au moins un élément de commutation (13, 45, 46) du second groupe, et une rotation de l'arbre de commutation (63) permettant d'actionner l'élément de commutation sélectionné, l'élément de commutation du premier groupe sélectionné pouvant être actionné par rapport à l'élément de commutation du second groupe sélectionné en phase, ou en déphasage avec chevauchement ou en déphasage avec décalage, et
- l'arbre de commutation (63) comporte un premier élément transmetteur (69) associé au premier groupe d'éléments de commutation (23, 27, 28, 29) et un second élément transmetteur (70) associé au second groupe d'éléments de commutation (13, 45, 46), les deux éléments transmetteurs (69, 70) étant couplés en rotation à l'arbre de commutation (63) ou reliés solidairement à cet arbre de commutation (63),
**caractérisé en ce qu'**
- au second groupe d'éléments de commutation (13, 45, 46) sont associés plusieurs seconds éléments récepteurs (73a-73e), chacun des seconds éléments récepteurs (73a-73e) étant couplé à au moins un élément de commutation (13, 45, 46) du second groupe et le second élément transmetteur (70) coopérant avec l'un des seconds éléments récepteurs (73-73e) en fonction de la position de coulissement de l'arbre de commutation (63) de sorte qu'un mouvement de rotation de l'arbre de commutation (63) et du second élément transmetteur (70) couplé à celui-ci soit transmis à l'élément récepteur des seconds éléments récepteurs (73a-73e) associé à la position de coulissement respective, et, à partir de cet élément récepteur sur l'élément de commutation (13, 45, 46) du second groupe couplé à celui-ci, et
- les éléments transmetteurs (69, 70) et les éléments récepteurs (72a-72h, 73a-73e) sont adaptés les uns aux autres de sorte que, hors d'une rotation de l'arbre de commutation, à partir d'un état dans lequel tous les éléments de commutation (23, 27,28, 29, 13, 45, 46) sont ouverts, pour tous les processus de commutation possibles, un élément de commutation (23, 27, 28, 29) du premier groupe commence toujours à se fermer et seulement après le début de la fermeture d'un élément de commutation (23, 27, 28, 29) du premier groupe, un élément de commutation (13, 45, 46) du second groupe commence à se fermer.

2. Dispositif de commutation conforme à la revendication 1,
**caractérisé en ce que**
l'arbre de commutation (63) est monté transversalement à la direction longitudinale (64) de la boîte de vitesses (1), en particulier transversalement à l'arbre d'entrée ou à l'arbre de sortie de la boîte de vitesses (1).

3. Dispositif de commutation conforme à la revendication 1 ou 2,
**caractérisé en ce qu'**
au premier groupe d'éléments de commutation (23, 27, 28, 29) sont associés plusieurs premiers éléments récepteurs (72a-72h), chacun des premiers éléments récepteurs (72a-72h) étant couplé à au moins un élément de commutation (23, 27, 28, 29) du premier groupe, et le premier élément transmetteur (69) coopère, en fonction de la position de coulissement de l'arbre de commutation (63) avec l'un des premiers éléments récepteurs (72a-72h) de sorte qu'une rotation de l'arbre de commutation (63) et du premier élément transmetteur (69) couplé à celui-ci soit transmise à l'élément récepteur des premiers éléments récepteurs (72a-72h) associé à la position de coulissement respective de l'arbre de commutation (63) et à partir de cet élément récepteur à l'élément de commutation (23, 27, 28, 29) du premier groupe couplé à celui-ci.

4. Dispositif de commutation conforme à l'une des revendications 1 à 3,
**caractérisé en ce que**
les éléments récepteurs (72a-72h, 73a-73e) comportent chacun une piste à coulisse (74a) le long de laquelle glisse le premier élément transmetteur ou le second élément transmetteur (69, 70) associé ou sur laquelle roule le premier élément transmetteur ou le second élément transmetteur (69, 70) associé, et l'élément récepteur (72a-72h, 73a-73h) associé étant ainsi coulissant.

5. Dispositif de commutation conforme à l'une des revendications 1 à 4,
**caractérisé en ce que**
le premier élément transmetteur (69) et/ou le second élément transmetteur (70) comporte(nt) un bras de levier sur lequel est monté mobile en rotation un rouleau (71a, 71b) qui s'applique sur la piste à coulisse (74a) de l'un des premiers ou seconds éléments transmetteurs (72a-72h, 73a-73e).

6. Dispositif de commutation conforme à la revendication 5,
**caractérisé en ce que**
le bras de levier est réalisé à double bras, et sur chacune des extrémités des bras un rouleau (71a, 71b) est monté mobile en rotation.

7. Dispositif de commutation conforme à l'une des revendications 1 à 6,
**caractérisé en ce qu'**
au moins un élément de commutation (23, 27, 28, 29) du premier groupe est couplé à au moins deux premiers éléments récepteurs (72a-72h).

8. Dispositif de commutation conforme à l'une des revendications 1 à 7,
**caractérisé en ce qu'**
au moins un élément de commutation du second groupe (13, 45, 46) est couplé à au moins deux seconds éléments récepteurs (73a-73e).

9. Dispositif de commutation conforme à l'une des revendications 1 à 8,
**caractérisé en ce que**
les premiers éléments récepteurs (72a-72h) sont montés les uns derrière les autres sur une première rangée.

10. Dispositif de commutation conforme à l'une des revendications 1 à 9,
**caractérisé en ce que**
les seconds éléments récepteurs (73a-73e) sont montés les uns derrière les autres sur une seconde rangée.

11. Dispositif de commutation conforme à l'une des revendications 1 à 10,
**caractérisé en ce qu'**
il est prévu un levier de commutation actionnable manuellement qui est couplé purement mécaniquement à l'arbre de commutation, et un pivotement du levier de commutation dans la direction transversale du véhicule (65) permet de faire coulisser l'arbre de pivotement (63) dans des voies de commutation individuelles, et un pivotement du levier de commutation dans la direction longitudinale du véhicule (74) permet de faire tourner l'arbre de commutation.

12. Dispositif de commutation conforme à l'une des revendications 1 à 11,
**caractérisé en ce que**
le premier groupe d'éléments de commutation (23, 27, 28, 29) est tourné vers la sortie de la boîte de vitesses (61) par rapport au second groupe d'éléments de commutation (13, 45, 46) ou inversement.

13. Dispositif de commutation conforme à l'une des revendications 1 à 12,
**caractérisé en ce qu'**
il est prévu un dispositif d'accrochage (67) qui définit plusieurs positions de coulissement de l'arbre de commutation (63) correspondant à plusieurs voies de commutation individuelles.
